# EUROPEAN PATENT SPECIFICATION

(11) **EP 2 221 342 B1**
(45) Date of publication and mention of the grant of the patent: **02.12.2015**
(21) Application number: 08859758.8
(22) Date of filing: 08.12.2008
(51) Int. Cl.: C08L 83/06, C08K 3/26, C08K 5/5415, C08K 9/04, C08L 83/04

(54) **ROOM-TEMPERATURE-CURABLE POLYORGANOSILOXANE COMPOSITION**
BEI RAUMTEMPERATUR HÄRTBARE POLYORGANOSILOXANZUSAMMENSETZUNG
COMPOSITION DE POLYORGANOSILOXANE DURCISSABLE À LA TEMPÉRATURE AMBIANTE

(30) Priority: 11.12.2007 JP 2007319154
(43) Date of publication of application: 25.08.2010
(73) Proprietor: Momentive Performance Materials Japan LLC, Tokyo 107-6112 (JP)
(72) Inventor: OBA, Toshio, Tokyo 107-6112 (JP)
(74) Representative: Diehl & Partner GbR
(86) International application number: PCT/JP2008/003638
(87) International publication number: WO 2009/075087

(56) References cited:
- EP-A2- 1 464 675
- WO-A1-2005/063891
- JP-A- 3 017 158
- JP-A- 6 157 910
- JP-A- 7 188 426
- JP-A- 2000 129 128
- JP-A- 2000 169 711
- JP-A- 2001 152 020
- JP-A- 2003 146 629
- JP-A- 2006 096 807
- JP-A- 2006 225 530
- JP-A- 2007 039 485
- JP-A- 2007 119 767
- JP-A- 2007 321 123
- US-A1- 2007 282 061

## Description

### Technical Field

The present invention relates to a room-temperature-curable polylorganosiloxane composition which can become a silicone rubber with matte surface after being cured at room temperature.

### Background Art

There are known various types of room-temperature-curable polyorganosiloxane compositions which can become rubber-like elastomers by curing thereof at room temperature in contact with moisture in air, and they are used as exterior sealing materials of buildings, and the like.

Since, however, existing silicone sealing materials have glossy surface after curing, they reflect sunlight tomake nearby people dazzle and thus are inappropriate to the environment in terms of aesthetic appearance, in some cases.

Accordingly, there has been desired a room-temperature-curable polyorganosiloxane composition which can become a silicone rubber having matte surface after curing.

In order to provide that type of silicone rubber having matte surface, it is proposed to add diatom earth and/or mica powder (JP-A 6-157910); contain an air oxidation curing type unsaturated higher fatty acid and the like (JP-A 2000-129128) ; contain a low-molecular-weight organic compoundwhichhas apolar site and is composed mostly of non-polar sites (JP-A 2000-169711) ; or attain matte surface by a specific preparation method without special additive (JP-A 2007-39485).

Such methods proposed in the related art, however, have problems of attaining insufficient matting effect and of having an adverse effect on the physical properties of the curedmaterial, in some cases.

European patent application EP 1 464 675 A2 discloses a room temperature curable organopolysiloxane composition comprising a hydroxyl end-capped diorganopolysiloxane, calcium carbonate, a vinyloxysilane or a partial hydrolytic condensate thereof, a metal-free curing catalyst, and a mixture or reaction product of a silane coupling agent having a primary amino group and a silane coupling agent having an epoxy, acrylic or methacrylic group.

### Disclosure of the Invention

An object of the present invention is to provide a room-temperature-curable polyorganosiloxane composition which solves the above problems and which can become a silicone rubber with matte surface without deteriorating the physical properties.

The inventors of the present invention have conducted detail study to solve the above problems, and have found that addition of two selected species of calcium carbonate to a room-temperature-curable polyorganosiloxane composition can suppress the surface gloss after the curing, and can maintain the physical properties, thereby having perfected the present invention.

That is, the present invention provides a room-temperature-curable polyorganosiloxane composition which contains:
(A) 100 parts by weight of a substantially straight-chain polyorganosiloxane having a viscosity of 20 to 1,000,000 centistokes at 25°C, and having a molecular chain terminal being sealed with a silanol group or a silicon atom-bonded hydrolyzable group;
(B) 0.1 to 15 parts by weight of an organic silicon compound having 3 or more silicon atom-bonded hydrolyzable groups in a single molecule;
(C) 0 to 15 parts by weight of a condensation reaction catalyst;
(D) 100 to 400 parts by weight of a non-treated ground calcium carbonate or a ground calcium carbonate surface-treated with resin acid or rosin acid; and
(E) 1 to 200 parts by weight of a non-treated precipitated calcium carbonate or a precipitated calcium carbonate surface-treated with resin acid or rosin acid,
wherein at least one of (D) component and (E) component is required to be treated with resin acid, and
wherein the amount of (D) component relative to the sum of (D) component and (E) component is within the range of 50 to 99.9% by weight.

### Detailed Description of the Invention

The polyorganosiloxane of (A) component used in the present invention is a straight-chain polyorganosiloxane having a molecular chain terminal being sealed with a silanol group or a silicon atom-bonded hydrolyzable group. The silicon atom-bonded hydrolyzable groups existing at the terminal of molecular chain of the polyorganosiloxane include: alkoxy groups such as methoxy group, ethoxy group or propoxy group; oxime groups such as methylethylketoxime group or dimethylketoxime group; alkenyloxy groups such as isopropenoxy group; and trimethoxy silylpropyl groups. Furthermore, other silicon atom-bonded organic groups existing in the polyorganosiloxane include: alkyl groups such as methyl group, ethyl group, propyl group, butyl group or octyl group; alkenyl groups such as vinyl group, allyl group or hexenyl group; aryl groups such as phenyl group or tolyl group; benzyl groups; and substituted alkyl groups such as 3,3,3-trifluoropropyl group, 3-chloropropyl group, 3-cyanopropyl group or chloromethyl group. When the viscosity of the polyorganosiloxane is excessively low, the rubber elasticity of the cured sealant becomes poor, and when the viscosity thereof is excessively high, the extrusion thereof needs high load to thereby make the injection from container such as cartridge difficult. Consequently, the viscosity thereof at 25°C is required to be within the range of 20 to 1,000,000 centistokes, preferably 100 to 100,000 centistokes.

The organic silicon compound of (B) component to be used in the present invention is a component which functions as the crosslinking agent to cross-link and cure the composition. The organic silicon compound is the one having 3 or more silicon atom-bonded hydrolyzable groups in a single molecule. The silicon atom-bonded hydrolysable group is preferably the same as the silicon atom-bonded hydrolysable group in (A) component. Such hydrolysable groups include alkoxy group, alkenyloxy group, and oxime group, which are described in the description of (A) component. Among them, alkoxy group and oxime group are specifically preferred. The examples of the organic silicon compounds having an alkoxy group can include: tri-functional alkoxy silanes such as methyltrimethoxy silane, ethyltrimethoxy silane, phenyltrimethoxy silane or vinyltrimthoxy silane, and a partially hydrolyzed condensate thereof; alkyl silicates such as methyl ortho silicate, ethyl ortho silicate, n-propyl ortho silicate or methyl cellosolve silicate, and a partially hydrolyzed condensate thereof; cyclic alkoxy siloxanes; and straight-chainalkoxy siloxanes. The organic silicon compounds having alkenyloxy group include alkenyloxy silanes such as methyl triisopropenoxy silane, vinyl triisopropenoxy silane, phenyl triisopropenoxy silane, tetraisopropenoxy silane, methyl tricyclohexenoxy silane or vinyl tricyclohexenoxy silane, and a partially hydrolyzed condensate thereof.

These organic silicon compounds can be used alone or in combination of two or more of them. There can be used an organic silicon compound having pluralities of hydrolysable groups in a single molecule.

The additive amount of (B) component is within the range of 0.1 to 15 parts by weight relative to 100 parts by weight of (A) component, and preferably 0.5 to 10 parts by weight. If the additive amount of (B) component is less than 0.1 parts by weight, the composition cannot be cured. If the additive amount thereof exceeds 15 parts by weight, curing of the composition delays, which is disadvantageous in economy.

The condensation reaction catalyst of (C) component to be used in the present invention is applied as necessary to enhance the curing of the composition of the present invention. This type of catalyst includes: organic acid salt of tin, titanium, zirconium, iron, antimony, bismuth, manganese; organic titanate ester; and organic titanium chelate compound. Examples of such condensation reaction catalysts are: organic tin compounds such as dibutyltin dilaurate, dibutyltin dioctoate or stannous octoate; and organic titanium compounds such as tetrabutyl titanate, tetraisopropyl titanate, diisopropoxybis(acetylacetate)titanium or diisopropoxybis (ethylacetoacetate)titanium. When (B) component is vinyltrioxime silane, (C) component may not be required. The additive amount of the component is within the range of 0 to 15 parts by weight to 100 parts by weight of (A) component, and preferably 0.001 to 10 parts by weight.

The present invention is characterized in adding two kinds of calcium carbonate: (D) component and (E) component.

As a person skilled in the art knows, calcium carbonate has various types such as ground calcium carbonate, precipitated calcium carbonate, and colloidal calcium carbonate, and further includes the one surface-treated with fatty acid, resin acid or rosin acid, a surfactant.

The inventors of the present invention have found that the significant effect on matting the surface is attained by the combinations of: (D) non-treated ground calcium carbonate and (E) precipitated calcium carbonate surface-treated with resin acid; (D) ground calcium carbonate surface-treated with resin acid and (E) precipitated calcium carbonate surface-treated with resin acid; and (D) ground calcium carbonate surface-treated with resin acid and (E) non-treated precipitated calcium carbonate. As clearly understood by the comparisons between examples and comparative examples, described later, combinations other than the above-described ones, such as a combination of a ground calcium carbonate surface-treated with resin acid and a precipitated calcium carbonate surface-treated with resin acid or a fatty acid, or a combination of a non-treated ground calcium carbonate and a precipitated calcium carbonate surface-treated with a fatty acid, or a sole non-treated ground calcium carbonate, cannot attain effective matting effect.

The particle size and other properties of (D) component and (E) component are not specifically limited, and the compounds which can be recognized as ordinary ground calcium carbonate or precipitated calcium carbonate are widely applicable. Furthermore, the kind of resin acid as the surface-treatment agent for the calcium carbonate of (D) component and (E) component is not specifically limited if only the resin acid is normally used. Examples of resin acid include rhodinic acid. The amount of the resin acid is also not specifically limited, and about 3% is preferred.

As (D) component and (E) component, various types of commercially available ones can be used. Examples of (D) component can include Super SS and Super #2000 manufactured by Maruo Calcium Co., Ltd., and µ-POWDER 2R manufactured by Bihoku Funka Kogyo Co., Ltd. Examples of (E) component can include HAKUENKA TDD and Brilliant-1500 manufactured by Shiraishi Kogyo Co., Ltd., and precipitated calcium carbonate manufactured by Maruo Calcium Co., Ltd.

According to the present invention, the additive amounts of (D) component and (E) component are required to 100 to 400 parts by weight for (D) component, and 1 to 200 parts by weight for (E) component relative to 100 parts by weight of (A) component, and also there is required (D) component of 50 to 99.9% by weight relative to the sum of (D) component and (E) component. If the additive amounts of (D) component and (E) component are excessively small, the matting property, the mechanical strength, and the adhesion property become insufficient. If the additive amounts of (D) component and (E) component are excessively large, the extrusion work from container before curing deteriorates. The composition of the present invention can easily be produced by uniformly blending the above (A) to (E) components, or (A) component, (B) component, (D) component, and (E) component. Further, other than those components, there can be added organic solvent, flowability-control agent, mildewcide, flame retardant, heat-resistant agent, adhesion enhancer, pigment, inorganic filler other than (D) component and (E) component, and electrical conduction-imparting component, as far as the object of the present invention is not deteriorated.

### Examples

The present invention will be described below in more detail referring to the embodiments. The term "parts" in Examples and Comparative Examples signifies the parts by weight. The properties such as viscosity are the values observed at 23°C unless otherwise specified.

### Example 1

A single-liquid type room-temperature-curable polyorganosiloxane composition was prepared by uniformly blending: 100partsofapolydimethylsiloxane, havingaviscosity of 20, 000 mPa·s and being sealed at both terminals of the molecule by methyldimethoxysiloxane group; 200 parts of non-treated ground calcium carbonate (Super SS, manufactured by Maruo Calcium Co., Ltd.); 100 parts of precipitated calcium carbonate surface-treated with rosin acid, (HAKUENKA T-DD, manufactured by Shiraishi Kogyo Co., Ltd.); 2 parts of carbon black; and 33 parts of polydimethylsiloxane, having a viscosity of 100 mPa·s and being sealed at both terminals of the molecule by trimethylsiloxy group, and then blending the obtained mixture with 5 parts of methyltrimethoxysilane, 5 parts of diisopropoxybis(ethylacetoacetate)titanium, and 1 part of 1,3,5-tris[3-(trimethoxysilyl)propyl]isocyanurate.

To avoid adhesion of thus obtained composition, a frame made of Teflon (trade mark) plate having a thickness of 2 mm was placed on a Teflon (trade mark) plate, and the composition was filled therein while avoiding inclusion of bubbles, and then the surface of composition filled was smoothened by using a spatula. After that, the composition was allowed to stand at 23°C and 50% RH to be cured to thereby form a sample having a size of 150 mm x 300 mm x 2 mm. The gloss and the physical properties were determined on thus obtained cured sample. Under the similar curing condition, a shear-adhesion sample of glass and aluminum (thickness of 2 mm and adhesion area of 25 mm x 10 mm), was prepared, and the adhesion force and the rate of cohesive failure of the sample were determined.

The results are given in Table 1. The glossiness as an index of matting property was determined by the 60 degree mirror gloss in accordance with JIS Z8741 by the use of a gloss meter IG-310 (manufactured by Horiba Limited). Smaller value means lessgloss. Other properties were determined in accordance with JIS A5758 and JIS K6301.

### Example 2

A single-liquid type room-temperature-curable polyorganosiloxane composition was prepared by the same procedure as that of Example 1 except that the amount of non-treated ground calcium carbonate was changed to 270 parts, and the amount of precipitated calcium carbonate surface-treated with resin acid was changed to 30 parts.

### Example 3

A single-liquid type room-temperature-curable polyorganosiloxane composition was prepared by the same procedure as that of Example 1 except that the amount of non-treated ground calcium carbonate was changed to 290 parts, and the amount of precipitated calcium carbonate surface-treated with resin acid was changed to 10 parts.

### Example 4

A single-liquid type room-temperature-curable polyorganosiloxane composition was prepared by the same procedure as that of Example 1 except that the amount of non-treated ground calcium carbonate was changed to 297 parts, and the amount of precipitated calcium carbonate surface-treated with resin acid was changed to 3 parts.

### Example 5

A single-liquid type room-temperature-curable polyorganosiloxane composition was prepared by the same procedure as that of Example 1 except that the 270 parts of non-treated calcium carbonate of Example 2 was changed to 270 parts of ground calcium carbonate surface-treated with resin acid (µ-POWDER 2R, manufactured by Bihoku Funka Kogyo Co., Ltd.)

### Example 6

A single-liquid type room-temperature-curable polyorganosiloxane composition was prepared by the same procedure as that of Example 1 except that the 270 parts of non-treated ground calcium carbonate of Example 2 was changed to 270 parts of ground calcium carbonate (µ-POWDER 2R, manufactured by Bihoku Funka Kogyo Co., Ltd.), and the 30 parts of precipitated calcium carbonate surface-treated with resin acid of Example 2 was changed to 30 parts of non-treated calcium carbonate (Brilliant-1500, manufactured by Shiraishi Kogyo Co., Ltd.)

### Comparative Example 1

A single-liquid type room-temperature-curable polyorganosiloxane composition was prepared by the same procedure as that of Example 1 except that the 200 parts of non-treated ground calcium carbonate was changed to the 200 parts of ground calcium carbonate surface-treated with resin acid (OMYACARB FT, manufactured by OMYA Inc.)

### Comparative Example 2

A single-liquid type room-temperature-curable polyorganosiloxane composition was prepared by the same procedure as that of Example 1 except that the 100 parts of precipitated calcium carbonate surface-treated with resin acid was changed to 100 parts of precipitated calcium carbonate surface-treated with a fatty acid (HAKUENKA CCR, manufactured by Shiraishi Kogyo Co., Ltd.).

### Comparative Example 3

A single-liquid type room-temperature-curable polyorganosiloxane composition was prepared by the same procedure as that of Example 1 except that the 200 parts of non-treated ground calcium carbonate was changed to 200 parts of ground calcium carbonate surface-treated with resin acid (OMYACARB FT, manufactured by OMYA Inc.), and that the 100 parts of precipitated calcium carbonate surface-treated with resin acid was changed to 100 parts of precipitated calcium carbonate surface-treated with a fatty acid (HAKUENKA CCR, manufactured by Shiraishi Kogyo Co., Ltd.).

### Comparative Example 4

A single-liquid type room-temperature-curable polyorganosiloxane composition was prepared by the same procedure as that of Example 1 except that the amount of the non-treated calcium carbonate (Super SS, manufactured by Maruo Calcium Co., Ltd.) was changed to 300 parts, and the precipitated calcium carbonate surface-treated with resin acid was not used.

**[Table 1]**

| | | Examples | | | | | | Comparative Examples | | | |
|---|---|---|---|---|---|---|---|---|---|---|---|
| Type of calcium carbonate | Surface-treatment agent | 1 | 2 | 3 | 4 | 5 | 6 | 1 | 2 | 3 | 4 |
| Ground calcium carbonate | Non-treated | 200 | 270 | 290 | 297 | | | | 200 | | 300 |
| | Resin acid | | | | | 270 | 270 | | | | |
| | Fatty acid | | | | | | | 200 | | 200 | |
| Precipitated calcium carbonate | Non-treated | | | | | | 30 | | | | |
| | Resin acid | 100 | 30 | 10 | 3 | 30 | | 100 | | | |
| | Fatty acid | | | | | | | | 100 | 100 | |
| 60 degree mirror gloss | | 0 | 1 | 5 | 10 | 8 | 10 | 15 | 38 | 42 | 18 |
| Hardness | | 40 | 42 | 47 | 43 | 42 | 43 | 39 | 34 | 34 | 44 |
| Tensile strength | MPa | 2.3 | 1.9 | 2.1 | 1.8 | 2.0 | 1.5 | 2.1 | 1.6 | 1.8 | 2.0 |
| Elongation | % | 300 | 260 | 270 | 230 | 330 | 330 | 350 | 330 | 380 | 280 |
| Shear adhesion force (Aluminum-glass) | MPa | 1..6 | 1.5 | 1.2 | 1.3 | 1.5 | 1.2 | 1.4 | 1.3 | 1.5 | 1.1 |
| Rate of cohesive failure (Aluminum-glass) | % | 100 | 100 | 100 | 100 | 100 | 100 | 100 | 100 | 100 | 100 |

## Claims

1. A room-temperature-curable polyorganosiloxane composition comprising:
(A) 100 parts by weight of a straight-chain polyorganosiloxane having a viscosity of 20 to 1,000,000 centistokes (2.10⁻⁵ to 1 m² /s) at 25°C, and having a molecular chain terminal being sealed with a silanol group or a silicon atom-bonded hydrolyzable group;
(B) 0.1 to 15 parts by weight of an organic silicon compound having 3 or more silicon atom-bonded hydrolyzable groups in a single molecule;
(C) 0 to 15 parts by weight of a condensation reaction catalyst;
(D) 100 to 400 parts by weight of a non-treated ground calcium carbonate or a ground calcium carbonate surface-treated with resin acid; and
(E) 1 to 200 parts by weight of a non-treated precipitated calcium carbonate or a precipitated calcium carbonate surface-treated with resin acid,
wherein at least one of (D) component and (E) component is required to be treated with resin acid, and
wherein the amount of (D) component relative to the sum of (D) component and (E) component is within the range of 50 to 99.9% by weight.

2. The room-temperature-curable polyorganosiloxane composition according to claim 1, in which the component (D) is a non-surface-treated ground calcium carbonate and the component (E) is a precipitated calcium carbonate surface-treated with resin acid.

3. The room-temperature-curable polyorganosiloxane composition according to claim 1, in which the component (D) is a ground calcium carbonate surface-treated with resin acid and the component (E) is a precipitated calcium carbonate surface-treated with resin acid.

4. The room-temperature-curable polyorganosiloxane composition according to claim 1, in which the component (D) is a ground calcium carbonate surface-treated with resin acid and the component (E) is a non-surface-treated precipitated calcium carbonate.

5. The room-temperature-curable polyorganosiloxane composition according to anyone of claims 1 to 4, which after being cured becomes a silicone rubber with matte surface.

## Patentansprüche

1. Bei Raumtemperatur härtbare Polyorganosiloxanzusammensetzung, Folgendes umfassend:
(A) 100 Gewichtsanteile eines geradkettigen Polyorganosiloxans mit einer Viskosität von 20 bis 1.000.000 Zentistokes (2×10⁻⁵ bis 1 m²/s) bei 25 °C und mit einer endständigen Silanolgruppe oder einer endständigen hydrolysierbaren Gruppe mit Siliciumatombindung;
(B) 0,1 bis 15 Gewichtsanteile einer organischen Siliciumverbindung mit 3 oder mehr hydrolysierbaren Gruppen mit Siliciumatombindung in einem einzigen Molekül;
(C) 0 bis 15 Gewichtsanteile eines Kondensationsreaktionskatalysators;
(D) 100 bis 400 Gewichtsanteile eines unbehandelten gemahlenen Calciumcarbonats oder eines mit Harzsäure oberflächenbehandelten gemahlenen Calciumcarbonats; und
(E) 1 bis 200 Gewichtsanteile eines unbehandelten ausgefällten Calciumcarbonats oder eines mit Harzsäure oberflächenbehandelten ausgefällten Calciumcarbonats,
wobei Komponente (D) und/oder Komponente (E) mit Harzsäure behandelt sein muss, und
wobei die Menge der Komponente (D) verglichen mit der Summe aus Komponente (D) und Komponente (E) im Bereich von 50 bis 99,9 Gew.-% liegt.

2. Bei Raumtemperatur härtbare Polyorganosiloxanzusammensetzung nach Anspruch 1, in der die Komponente (D) ein nicht oberflächenbehandeltes gemahlenes Calciumcarbonat ist und die Komponente (E) ein mit Harzsäure oberflächenbehandeltes ausgefälltes Calciumcarbonat ist.

3. Bei Raumtemperatur härtbare Polyorganosiloxanzusammensetzung nach Anspruch 1, in der die Komponente (D) ein mit Harzsäure oberflächenbehandeltes gemahlenes Calciumcarbonat ist und die Komponente (E) ein mit Harzsäure obertlächenbehandeltes ausgefälltes Calciumcarbonat ist.

4. Bei Raumtemperatur härtbare Polyorganosiloxanzusammensetzung nach Anspruch 1, in der die Komponente (D) ein mit Harzsäure oberflächenbehandeltes gemahlenes Calciumcarbonat ist und die Komponente (E) ein nicht oberflächenbehandeltes ausgefälltes Calciumcarbonat ist.

5. Bei Raumtemperatur härtbare Polyorganosiloxanzusammensetzung nach einem der Ansprüche 1 bis 4, die nach dem Aushärten zu Silikonkautschuk mit matter Oberfläche wird.

## Revendications

1. Composition de polyorganosiloxane durcissable à température ambiante comprenant :
(A) 100 parties en poids d'un polyorganosiloxane à chaîne droite ayant une viscosité de 20 à 1 000 000 centistokes (2.10⁻⁵ à 1 m²/s) à 25 °C, et ayant une terminaison de chaîne moléculaire scellée avec un groupe silanol ou un groupe hydrolysable lié à un atome de silicium ;
(B) 0,1 à 15 parties en poids d'un composé de silicium organique ayant 3 groupes hydrolysables liés à un atome de silicium ou plus dans une seule molécule ;
(C) 0 à 15 parties en poids d'un catalyseur de réaction de condensation ;
(D) 100 à 400 parties en poids d'un carbonate de calcium broyé non traité ou d'un carbonate de calcium broyé traité en surface avec un acide résinique ; et
(E) 1 à 200 parties en poids d'un carbonate de calcium précipité non traité ou d'un carbonate de calcium précipité traité en surface par un acide résinique,
dans laquelle au moins l'un du composant (D) et du composant (E) a l'exigence d'être traité avec un acide résinique, et
dans laquelle la quantité du composant (D) par rapport à la somme du composant (D) et du composant (E) est dans la plage de 50 à 99,9 % en poids.

2. Composition de polyorganosiloxane durcissable à température ambiante selon la revendication 1, dans laquelle le composant (D) est un carbonate de calcium broyé non traité en surface et le composant (E) est un carbonate de calcium précipité traité en surface avec un acide résinique.

3. Composition de polyorganosiloxane durcissable à température ambiante selon la revendication 1, dans laquelle le composant (D) est un carbonate de calcium broyé traité en surface avec un acide résinique et le composant (E) est un carbonate de calcium précipité traité en surface avec un acide résinique.

4. Composition de polyorganosiloxane durcissable à température ambiante selon la revendication 1, dans laquelle le composant (D) est un carbonate de calcium broyé traité en surface avec un acide résinique et le composant (E) est un carbonate de calcium précipité non traité en surface.

5. Composition de polyorganosiloxane durcissable à température ambiante selon l'une quelconque des revendications 1 à 4, qui, après avoir été durcie, devient un caoutchouc de silicone de surface mate.
